# EUROPÄISCHE PATENTSCHRIFT

(11) **EP 0 523 381 B1**
(45) Veröffentlichungstag und Bekanntmachung des Hinweises auf die Patenterteilung: **07.10.1998**
(21) Anmeldenummer: 92110104.4
(22) Anmeldetag: 16.06.1992
(51) Int. Cl.: H02J 7/00, H02J 7/10

(54) **Verfahren und Vorrichtung zum Laden wiederaufladbarer Batterien**
Method and device for charging a rechargeable battery
Procédé et dispositif de charge d'une batterie rechargeable

(30) Priorität: 18.07.1991 DE 9108866 U
(43) Veröffentlichungstag der Anmeldung: 20.01.1993
(73) Patentinhaber: THEO BENNING ELEKTROTECHNIK UND ELEKTRONIK GMBH & CO. KG, D-46397 Bocholt (DE)
(72) Erfinder: Saul, Wilhelm, W-4290 Bocholt (DE)
(74) Vertreter: Stenger, Watzke & Ring Patentanwälte

(56) Entgegenhaltungen:
- EP-A- 0 349 995
- WO-A-92/15140
- DE-A- 3 637 669
- FR-A- 2 358 767

## Beschreibung

Die Erfindung betrifft ein Verfahren und eine Vorrichtung zum Laden wiederaufladbarer Batterien, vorzugsweise in wartungsfreier, verschlossener Ausführung, unter Verwendung eines den Ladestrom steuernden Ladeschalters, der zur Anpassung an die Charakteristik der jeweils angeschlossenen Batterie nach mindestens zwei verschiedenen in dem Ladeschalter abgelegten Ladeprogrammen betreibbar ist und unter Verwendung eines von der Batterie trennbaren, batteriespezifischen Bauteils, welches zum Betreiben des jeweiligen Ladeprogramms über Steckkontakte an den Steuerstromkreis des Ladeschalters anschließbar ist und lösbar an dem Ladeschalter befestigt wird.

Es ist bekannt, Steuerschalter für Batterieladegeräte, sogenannte Ladeschalter, mit Prozessorsystemen zu bestücken, die mit den jeweils erforderlichen Ladeprogrammen geladen werden. Bei der Anwendung solcher Systeme wird der Ladeverlauf durch das Ladeprogramm gesteuert, wobei in der Regel vorgegebene, auf den jeweiligen Batterietyp abgestimmte Ladekennlinien abgefahren werden, wobei die Ladekennlinien während des Ladeverlaufs im Hinblick auf besondere Randbedingungen, etwa den Zustand der Batterie, modifiziert werden können.

Um den Ladeschalter bei verschiedenartigen Batterietypen anwenden zu können, ist es darüber hinaus bekannt, im Prozessorsystem des Ladeschalters mehrere verschiedene Ladeprogramme abzuspeichern. Die Einstellung des jeweils erforderlichen Ladeprogramms erfolgt dann in Abhängigkeit von der angeschlossenen Batterie durch Betätigen einer Tastenfunktion am Ladeschalter. Nachteilig bei dieser bekannten Vorrichtung ist, daß bei einer großen Zahl abgespeicherter Ladeprogramme eine entsprechend große Zahl Auswahltasten erforderlich ist, wodurch die Bedienung der Vorrichtung insgesamt unübersichtlich wird und Bedienfehler bei der Vorgabe der für den Batterietyp erforderlichen Ladecharakteristik auftreten können. Solche Bedienfehler können insbesondere bei modernen, wartungsfreien Batterien zu Schädigungen und Zerstörungen der Batterie führen, da diese Batterien konstruktionsbedingt exakte Ladeverfahren erfordern. Hierbei muß insbesondere vermieden werden, daß durch zu hohe Ladeströme ein Überladen der Batterien eintritt.

Aus der DE-A-36 37 669 ist eine Vorrichtung zum automatischen Feststellen der elektrischen Kennwerte eines Akkumulators bekannt. Die verschiedenen Kennwerte, beispielsweise Spannungen oder Ladeströme, sind in kodierter Form am bzw. im Akkumulator vorgesehen. Ein Ladegerät enthält eine Dekodiervorrichtung, die die Codierung des Akkumulators abtastet und aus der Codierung Signale zum Schalten der Ladeschaltung des Ladegerätes bildet. Nachteilig ist bei der bekannten Vorrichtung, daß die Codierung der Signale zum Umschalten der Ladeschaltung des Ladegerätes fest am Akkumulator bzw. am Akkumulatorgehäuse angebracht bzw. angeordnet ist.

Aus der EP-A-0 349 995 ist ein Verfahren zur Anpassung eines Batterieladegerätes an unterschiedliche Ladeverfahren und Batterietypen sowie ein entsprechendes Batterieladegerät bekannt. Ein Batterieladegerät enthält ein zugeordnetes Programm-Modul, welches dem Batterietyp und/oder dem Ladeverfahren entsprechend ausgetauscht werden kann. In einer Ausführung besteht dieses Programm-Modul aus einem Programmspeicher in Form eines EPROMs, das auf das Ladegerät aufsteckbar ist. Dabei sind die entsprechenden Ladeprogramme in dem EPROM programmiert und können bei Bedarf wieder gelöscht und neu programmiert werden. Bei neuen Batterietypen müssen daher dementsprechend neue Programme in dem EPROM abgespeichert werden.

Der Erfindung liegt die **Aufgabe** zugrunde, ein Verfahren und eine Vorrichtung zum Laden wiederaufladbarer Batterien und insbesondere wartungsfreier, verschlossener Batterien zu schaffen, mit welchen Bedienfehler bei der Vorgabe der für den jeweiligen Batterietyp erforderlichen Ladecharakteristik vermieden werden können.

Zur **Lösung** dieser Aufgabenstellung wird verfahrensseitig vorgeschlagen, daß das batteriespezifische Bauteil zur Zuordnung zur jeweiligen Batterie mit einer überprüfbaren Kennzeichnung versehen ist und als batteriespezifisches Bauteil eine nur einen Teil der am Ladeschalter zur Verfügung stehenden Steckkontakte überbrückende Kontaktbrücke oder ein mittels einer Schaltung im Ladeschalter identifizierbarer elektrischer Widerstand verwendet wird, um das zugehörige, im Ladeschalter abgelegte Ladeprogramm entsprechend den überbrückten Steckkontakten oder dem Widerstandswert des identifizierten Widerstands abzurufen.

Vorrichtungsseitig wird ein Ladesystem zum Laden wiederaufladbarer Batterien, vorzugsweise in wartungsfreier, verschlossener Ausführung, bestehend aus einem den Ladestrom steuernden Ladeschalter und einem von der Batterie trennbaren, batteriespezifischen Bauteil, wobei der Ladeschalter zur Anpassung an die Charakteristik der jeweils angeschlossenen Batterie nach mindestens zwei verschiedenen in dem Ladeschalter abgelegten Ladeprogrammen betreibbar ist, und wobei das batteriespezifische Bauteil zum Betreiben des jeweiligen Ladeprogramms am Ladeschalter lösbar über Steckkontakte an den Steuerstromkreis des Ladeschalters anschließbar befestigbar ist, bereitgestellt, das dadurch gekennzeichnet, daß das batteriespezifische Bauteil zur Zuordnung zur jeweiligen Batterie mit einer überprüfbaren Kennzeichnung versehen ist und das batteriespezifische Bauteil als nur einen Teil der am Ladeschalter zur Verfügung stehenden Steckkontakte überbrückenden Kontaktbrücke oder als ein mittels einer Schaltung im Ladeschalter identifizierbarer elektrischer Widerstand ausgebildet ist und durch das batterispezifische Bauteil das zugehörige, im Ladeschalter abgelegte Ladeprogramm entsprechend den überbrückten Steckkontakten oder dem Widerstandswert des identifizierten Widerstands abrufbar ist.

Mit diesem Verfahren und dieser Vorrichtung sind Bedienfehler bei der Vorgabe der erforderlichen Ladecharakteristik weitgehend ausgeschlossen, da das Ladeverfahren erst mit Einsetzen des das Ladeprogramm des Ladeschalters bestimmenden Bauteils an einer geeigneten Aufnahme des Ladeschalters abgerufen werden kann, dieses Bauteil jedoch batteriespezifisch festlegbar ist, beispielsweise durch eine geeignete Kennzeichnung. Das Starten des Ladeprogrammes ist also nur bei Vorhandensein des zum jeweiligen Batterietyp gehörenden, am Ladeschalter ansetzbaren Bauteiles möglich. Vorzugsweise verfügt die Batterie hierzu über eine geeignete Aufnahme oder Halterung, in der das Bauteil außerhalb der Ladezeit aufbewahrt werden kann.

Vorteilhaft ist ferner, daß bei entsprechender äußerer Kennzeichnung des das Ladeprogramm bestimmenden Bauteils bereits durch einen kurzen optischen Vergleich eine Kontrolle möglich ist, ob Batterie und Bauteil einander entsprechen und damit die richtige Ladecharakteristik eingestellt ist.

Bei einer Weiterbildung der Vorrichtung ist das das Ladeprogramm des Ladeschalters bestimmende Bauteil als in eine Aufnahme am Ladeschalter einsteckbare Chipkarte mit vorzugsweise aufgedruckter Schaltung ausgebildet. Eine solche Chipkarte eignet sich insbesondere zur Aufnahme weiterer Funktionen, etwa der Abspeicherung spezifischer, batteriebegleitender Daten.

Bei einer Ausgestaltung ist das Bauteil als Kontaktbrücke ausgebildet, die nur einen Teil der am Ladeschalter zur Verfügung stehenden Steckkontakte überbrückt. Bei dieser einfachsten Möglichkeit einer praktischen Realisierung der Erfindung wird durch das Bauteil nur jeweils einer von mehreren möglichen Kontakten überbrückt, wodurch innerhalb des Ladeschalters die elektrische Anbindung des betreffenden Ladeprogrammes erfolgt.

Eine Variante ist dadurch gekennzeichnet, daß das Bauteil als mittels einer Schaltung im Ladeschalter identifizierbarer elektrischer Widerstand ausgebildet ist. Der Wert dieses vorzugsweise auf einer Chipkarte bereits aufgedruckten Widerstandes wird innerhalb der Vorrichtung erkannt und dann das diesem Widerstandswert zugeordnete Ladeprogramm aus dem Speicher der Vorrichtung abgerufen.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäßen Vorrichtung zum Laden wiederaufladbarer Batterien beschrieben ist. In den Zeichnungen zeigen:
- Fig. 1: ein Blockschaltbild einer Vorrichtung zum Laden wiederaufladbarer Batterien mit einem Ladeschalter und
- Fig. 2: eine Variante des Ladeschalters nach Fig. 1.

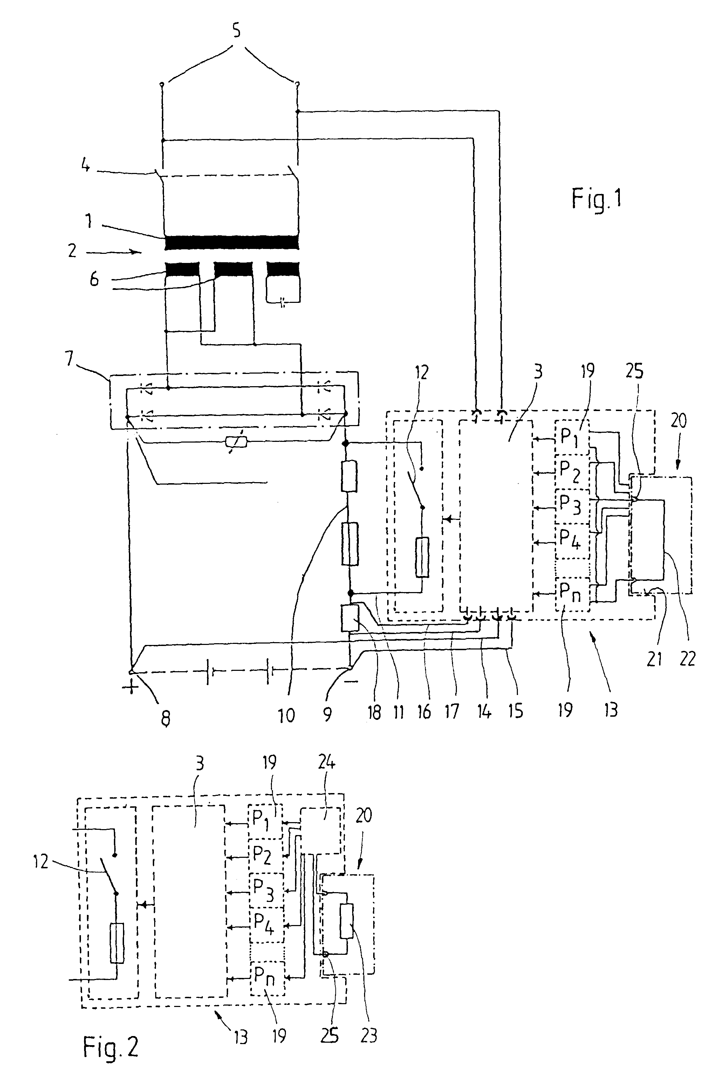

In der Fig. 1 ist ein Schaltbild für eine Vorrichtung zum Laden wiederaufladbarer Batterien dargestellt. Die Darstellung erfolgt am Beispiel eines einphasigen Gerätes. Die Primärseite 1 eines Spannungskonstanthalters 2, wie er beispielsweise in der DE-OS 26 31 974 erläutert ist, ist über ein in Abhängigkeit von Signalen einer Kontrolleinheit 3 steuerbares Netzschütz 4 an eine Netzspannung 5 anschließbar. Bei geschlossenem Netzschütz 4 wird auf einer Sekundärseite 6 des Spannungskonstanthalters 2 eine von Netzspannungsänderungen unbeeinflußte Wechselspannung erzeugt. Diese Wechselspannung wird in einer Gleichrichterbrücke 7 gleichgerichtet und liegt als Ladespannung an den Batterieklemmen 8,9 der aufzuladenden Batterie an.

Die den Minuspol bildende Batterieklemme 9 ist mit der Gleichrichterbrücke 7 über zwei parallel zueinander verlaufende Strompfade 10,11 verbunden. Über den nicht zu unterbrechenden ersten Stompfad 10 ist, sofern das Netzschütz 4 geschlossen ist, die zu ladende Batterie dauernd an die Netzspannung 5 angeschlossen. Die Aufladung der Batterie erfolgt dabei mit einem niedrigen Ladestrom.

Im zweiten Strompfad 11 ist ein Schalter 12 angeordnet, der zusammen mit der Kontrolleinheit 3 Bestandteil eines Ladeschalters 13 ist. Die öffnende bzw. schließende Funktion des Schalters 12 des Ladeschalters 13 wird durch Signale der Kontrolleinheit 3 gesteuert. Bei geschlossenem Schalter 12 sind der erste Strompfad 10 und der zweite Strompfad 11 parallel zueinander geschaltet, so daß die Batterie, gesteuert durch die Kontrolleinheit 3, mit einem hohen Ladestrom aufgeladen wird.

Zur Erfassung der Batteriespannung verfügt die Kontrolleinheit 3 über mit den Batterieklemmen 8,9 in Verbindung stehende Leitungen 14,15. Zur Erfassung des Ladestromes führen zwei weitere Leitungen 16,17 von der Kontrolleinheit 3 des Ladeschalters 13 zu den beiden Anschlüssen eines Meßwiderstandes 18, der zwischen den vereinigten Strompfaden 10,11 und der den Minuspol der Batterie bildenden Batterieklemme 9 angeschlossen ist.

Vor Beginn der Batterieladung ist das Netzschütz 4 geöffnet. Nach einem Anschluß der Schaltung an die Batterieklemmen 8,9 wird - eventuell mit zeitlicher Verzögerung - das Netzschütz 4 durch die Kontrolleinheit 3 in seine geschlossene Stellung geschaltet. Anschließend wird durch Betätigung des Schalters 12 in Abhängigkeit von Signalen der Kontrolleinheit 3 durch Zuschalten bzw. Abschalten des Strompfades 11 die Batterie gesteuert aufgeladen.

Diese Steuerung erfolgt batteriespezifisch nach einem vorgegebenen Ladeprogramm. Bei der Ausführungsform nach Fig. 1 sind im Ladeschalter 13 mehrere Ladeprogramme P₁ bis Pₙ in entsprechenden Speichern 19 des Ladeschalters 13 abgelegt. Beim Laden der Batterie wird über die Kontrolleinheit 3 das jeweilige Ladeprogramm P₁ bis Pₙ abgerufen und der Schalter 12 programm-gemäß gesteuert. Um aus der Vielzahl der zur Verfügung stehenden Ladeprogramme das jeweils erforderliche Programm auszuwählen, ist am Ladeschalter 13 ein als Chipkarte 20 ausgebildetes Bauteil befestigbar. In Fig. 1 ist schematisch eine Ausnehmung 21 am Ladeschalter 13 ausgebildet, in die sich die Chipkarte 20 einführen läßt. Hierbei wird über eine auf der Chipkarte 20 aufgedruckte Kontaktbrücke 22 einer der Speicher 19 aktiviert, so daß dann das entsprechende Ladeprogramm von der Kontrolleinheit 3 abgerufen werden kann. Beim Ausführungsbeispiel entsprechend Fig. 1 ist eine Chipkarte 20 vorgesehen, deren Kontaktbrücke 22 den Speicher 19 des Ladeprogramms P₃ aktiviert. Bei der Chipkarte 20 handelt es sich um ein batteriespezifisches Bauteil, welches von Batterieherstellern gemeinsam mit der Batterie bereitgestellt wird und welches vorzugsweise beim Betrieb der Batterie an dieser sichtbar befestigt bleibt. Die Chipkarte 20 verfügt über eine in der Zeichnung nicht dargestellte optische Kennzeichnung, um die Zuordnung zur jeweiligen Batterie leicht überprüfen zu können.

Bei dem Ausführungsbeispiel einer Vorrichtung zum Laden wiederaufladbarer Batterien nach Fig. 2 ist die Chipkarte 20 anstelle einer Kontaktbrücke mit einem Widerstand 23 versehen, dessen Widerstandswert mittels einer Meßschaltung 24 erkannt wird. Entsprechend dem Wert des Widerstandes 23, der batteriespezifisch festgelegt ist, erfolgt dann die Aktivierung des jeweiligen Speichers 19 mit dem Ladeprogramm.

### Bezugszeichenliste

- 1: Primärseite
- 2: Spannungskonstanthalter
- 3: Kontrolleinheit
- 4: Netzschütz
- 5: Netzspannung
- 6: Sekundärseite
- 7: Gleichrichterbrücke
- 8: Batterieklemme
- 9: Batterieklemme
- 10: Strompfad
- 11: Strompfad
- 12: Schalter
- 13: Ladeschalter
- 14: Leitung
- 15: Leitung
- 16: Leitung
- 17: Leitung
- 18: Meßwiderstand
- 19: Speicher
- 20: Chipkarte
- 21: Ausnehmung
- 22: Kontaktbrücke
- 23: Widerstand
- 24: Meßschaltung
- 25: Steckkontakt
- P₁ - Pₙ: Ladeprogramme

## Patentansprüche

1. Verfahren zum Laden wiederaufladbarer Batterien, vorzugsweise in wartungsfreier, verschlossener Ausführung, unter Verwendung eines den Ladestrom steuernden Ladeschalters (13), der zur Anpassung an die Charakteristik der jeweils angeschlossenen Batterie nach mindestens zwei verschiedenen in dem Ladeschalter (13) abgelegten Ladeprogrammen (P₁ - Pn) betreibbar ist und unter Verwendung eines von der Batterie trennbaren, batteriespezifischen Bauteils (20), welches zum Betreiben des jeweiligen Ladeprogramms (P₁ - Pn) über Steckkontakte (25) an den Steuerstromkreis des Ladeschalters (13) anschließbar ist und lösbar an dem Ladeschalter (13) befestigt wird,
**dadurch gekennzeichnet**,
daß das batteriespezifische Bauteil (20) zur Zuordnung zur jeweiligen Batterie mit einer überprüfbaren Kennzeichnung versehen ist und als batteriespezifisches Bauteil (20) eine nur einen Teil der am Ladeschalter (13) zur Verfügung stehenden Steckkontakte (25) überbrückende Kontaktbrücke (22) oder ein mittels einer Schaltung (24) im Ladeschalter (13) identifizierbarer elektrischer Widerstand (23) verwendet wird, um das zugehörige, im Ladeschalter (13) abgelegte Ladeprogramm (P₁ - Pn) entsprechend den überbrückten Steckkontakten (25) oder dem Widerstandswert des identifizierten Widerstands (23) abzurufen.

2. Ladesystem zum Laden wiederaufladbarer Batterien, vorzugsweise in wartungsfreier, verschlossener Ausführung, bestehend aus einem den Ladestrom steuernden Ladeschalter (13) und einem von der Batterie trennbaren, batteriespezifischen Bauteil (20), wobei der Ladeschalter (13) zur Anpassung an die Charakteristik der jeweils angeschlossenen Batterie nach mindestens zwei verschiedenen in dem Ladeschalter (13) abgelegten Ladeprogrammen (P₁ - Pn) betreibbar ist, und wobei das batteriespezifische Bauteil (20) zum Betreiben des jeweiligen Ladeprogramms (P₁ - Pn) am Ladeschalter (13) lösbar über Steckkontakte (25) an den Steuerstromkreis des Ladeschalters (13) anschließbar befestigbar ist,
**dadurch gekennzeichnet**,
daß das batteriespezifische Bauteil (20) zur Zuordnung zur jeweiligen Batterie mit einer überprüfbaren Kennzeichnung versehen ist und das batteriespezifische Bauteil (20) als nur einen Teil der am Ladeschalter (13) zur Verfügung stehenden Steckkontakte (25) überbrückende Kontaktbrücke (22) oder als ein mittels einer Schaltung (24) im Ladeschalter (13) identifizierbarer elektrischer Widerstand (23) ausgebildet ist und durch batteriespezifische Bauteil (20) das zugehörige, im Ladeschalter (13) abgelegte Ladeprogramm (P₁ - Pn) entsprechend den überbrückten Steckkontakten (25) oder dem Widerstandswert des identifizierten Widerstandes (23) abrufbar ist.

## Claims

1. Method for charging rechargeable batteries, preferably of a maintenance-free, sealed design, using a charging switch (13) which controls the charging current and, for matching to the characteristic of the respectively connected battery, can be operated using at least two different charging programs (P₁ - Pₙ) which are stored in the charging switch (13), and using a battery-specific component (20) which can be separated from the battery, can be connected to the control circuit of the charging switch (13) via plug contacts (25) in order to operate the respective charging program (P₁ - Pₙ) and is detachably mounted on the charging switch (13), characterized in that the battery-specific component (20) is provided with a marking which can be checked for association with the respective battery, and a contact link (22), which bridges only some of the plug contacts (25) available on the charging switch (13), or an electrical resistor (23), which can be identified by means of a circuit (24) in the charging switch (13), is used as the battery-specific component (20) in order to call up the associated charging program (P₁ - Pₙ) which is stored in the charging switch (13), corresponding to the bridged plug contacts (25) or the resistance of the identified resistor (23).

2. Charging system for charging rechargeable batteries, preferably of a maintenance-free, sealed design, comprising a charging switch (13) which controls the charging current, and a battery-specific component (20) which can be separated from the battery, in which case, for matching to the characteristic of the respectively connected battery, the charging switch (13) can be operated using at least two different charging programs (P₁ - Pₙ) which are stored in the charging switch (13), and in which case, in order to operate the respective charging program (P₁ - Pₙ), the battery-specific component (20) can be mounted on the charging switch (13) such that it can be detachably connected via plug contacts (25) to the control circuit of the charging switch (13), characterized in that the battery-specific component (20) is provided with a marking which can be checked for association with the respective battery and the battery-specific component (20) is designed as a contact link (22) which bridges only some of the plug contacts (25) available on the charging switch (13), or as an electrical resistor (23) which can be identified by means of a circuit (24) in the charging switch (13), and the associated charging program (P₁ - Pₙ), which is stored in the charging switch (13), can be called up by the battery-specific component (20), corresponding to the bridged plug contacts (25) or the resistance of the identified resistor (23).

## Revendications

1. Procédé pour charger des batteries rechargeables, de préférence dans une forme de réalisation fermée ne nécessitant pas de surveillance, utilisant un interrupteur de charge (13) qui commande le courant de charge et qui peut être exploité, pour l'adaptation à la caractéristique de la batterie respectivement raccordée, selon au moins deux programmes de charge différents (P₁ à Pₙ) mémorisés dans l'interrupteur de charge (13) et utilisant un module (20) qui est spécifique à la batterie, qui peut être séparé de la batterie et qui, pour l'exploitation du programme de charge (P₁ à Pₙ) respectif, peut être raccordé par l'intermédiaire de contacts à fiches (25) au circuit de courant de commande de l'interrupteur de charge (13) et qui est fixé amovible sur l'interrupteur de charge (13),
caractérisé en ce que
le module (20) spécifique à la batterie est muni, pour l'association à la batterie respective, d'une marque caractéristique pouvant être contrôlée et en ce que l'on utilise comme module (20) spécifique à la batterie un pont de contact (22) pontant seulement une partie des contacts à fiches (25) disponibles sur l'interrupteur de charge (13) ou une résistance électrique (23) identifiable au moyen d'un circuit (24) dans l'interrupteur de charge (13), afin d'appeler le programme de charge (P₁ à Pₙ) associé, mémorisé dans l'interrupteur de charge (13), en fonction des contacts à fiches (25) pontés ou en fonction de la valeur résistive de la résistance (23) identifiée.

2. Système de charge pour charger des batteries rechargeables, de préférence dans une forme de réalisation fermée ne nécessitant pas de surveillance, constitué d'un interrupteur de charge (13) commandant le courant de charge et d'un module (20) spécifique à la batterie et pouvant être séparée de la batterie, dans lequel l'interrupteur de charge (13), pour l'adaptation à la caractéristique de la batterie respectivement raccordée, peut être exploité selon au moins deux programmes de charge différents (P₁ à Pₙ) mémorisés dans l'interrupteur de charge (13) et dans lequel le module (20) spécifique à la batterie, pour l'exploitation du programme de charge (P₁ à Pₙ) respectif, peut être fixé amovible sur l'interrupteur de charge (13) de manière à pouvoir être raccordé par l'intermédiaire de contacts à fiches (25) au circuit de courant de commande de l'interrupteur de charge (13),
caractérisé en ce que
le module (20) spécifique à la batterie est muni, pour l'association à la batterie respective, d'une marque caractéristique pouvant être contrôlée, en ce que le module (20) spécifique à la batterie est conçu comme un pont de contact (22) pontant seulement une partie des contacts à fiches (25) disponibles sur l'interrupteur de charge (13) ou comme une résistance électrique (23) identifiable au moyen d'un circuit (24) dans l'interrupteur de charge (13), et en ce que le module (20) spécifique à la batterie permet d'appeler le programme de charge (P₁ à Pₙ) associé, mémorisé dans l'interrupteur de charge (13), en fonction des contacts à fiches (25) pontés ou en fonction de la valeur résistive de la résistance (23) identifiée.
